# EUROPEAN PATENT SPECIFICATION

(11) **EP 3 346 850 B1**
(45) Date of publication and mention of the grant of the patent: **09.09.2020**
(21) Application number: 16845302.5
(22) Date of filing: 12.09.2016
(51) Int. Cl.: A23L 3/30, A01K 61/13, A01K 79/02, A01K 61/60, A01K 61/80

(54) **ULTRASONIC ERADICATION OF SEA LICE ON FARMED FISH**
ULTRASCHALL-AUSROTTUNG VON SEELÄUSEN AUF ZUCHTFISCHEN
ÉRADICATION ULTRASONORE DE POUX DE MER SUR DES POISSONS D'ÉLEVAGE

(30) Priority: 11.09.2015 US 201562217285 P
(43) Date of publication of application: 18.07.2018
(73) Proprietor: Alevy, Steven, New York, NY 10025 (US)
(72) Inventor: Alevy, Steven, New York, NY 10025 (US)
(74) Representative: Murgitroyd & Company
(86) International application number: PCT/US2016/051399
(87) International publication number: WO 2017/044985

(56) References cited:
- EP-A1- 2 962 556
- WO-A1-94/17657
- WO-A1-2013/051725
- GB-A- 2 309 621
- US-A- 5 810 566
- US-A1- 2005 075 587
- US-A1- 2013 050 465
- US-B2- 8 062 587
- Inigo Flamarique ET AL: "Monitoring and potential control of sea lice using an LED-based light trap", , 7 August 2009 (2009-08-07), pages 1-12, XP055518911, Retrieved from the Internet: URL:http://www.grammar-worksheets.com/essa ys/printable/salmon/lice.led.article.pdf [retrieved on 2018-10-25]
- FARRELL R K ET AL: "EFFECT OF ULTRASOUND ON TREMATODE CERCARIAE", THE JOURNAL OF PARASITOLOGY, AMERICAN SOCIETY OF PARASITOLOGISTS, US, vol. 59, no. 4, 1 August 1973 (1973-08-01) , page 747/748, XP000654048, ISSN: 0022-3395
- FLAMARIQUE ET AL.: 'Monitoring and potential control of sea lice using an LED-based light trap', [Online] 07 August 2009, pages 1 - 12, XP055518911 Retrieved from the Internet: <URL:HTTP://WWW.GRAMMAR-WORKSHEETS.COM/ESSA YS/PRINTABLE/SALMON/LICE.LED.ARTICLE.PDF> [retrieved on 2017-02-22]
- WOLBER ET AL.: 'Ultrasonic water treatment as an alternative means of controlling fish mortality caused by bucephalus polymorphus cercariae', [Online] vol. 24, no. 3, January 2004, pages 153 - 160, XP055383239 Retrieved from the Internet: <URL:https://eafp.org/download/2004-Volume2 4/Issue%203/24_153.pdf> [retrieved on 2017-02-22]

## Description

### Field of the Invention

Examples of reducing parasites from fish are disclosed in documents WO 94/17657 A1, GB 2 309 621 A1 and WO 2013/051725 A1. The present invention relates to ultrasonic treatment for fish and particularly salmon farm applications which is equally effective on sea lice at each life stage of the sea lice - for sea lice attached to the salmon as well as free swimming sea lice in the salmon pen. The invention particularly relates to sound wave and the ultrasound equipment to produce needed sound wave (common adjustable variables primarily include ultrasound frequency, intensity, beam dimension, and duration) as well as the design for a treatment device (such as size, shape, efficiency, to be effective for either continuous flowing, stagnant water sources) to produce the most efficient and effective combination of variables to effectively kill sea lice and not harm fish.

### BACKGROUND

The culture of salmons, all salmon species and salmon trout, is a successful example of intensive aquaculture in the world, achieved via innovative research, technological advancement and creative design. Among them, Atlantic salmon is by far the most important and common species (in the North Atlantic, from New England to Ungava Bay in Canada in the west, Iceland, Greenland and from northern Portugal to the Kara Sea off Russia on the east). Atlantic salmon is easy to adapt into and grow well in the culture conditions and with a relatively high commercial value.

Sea lice (Family Caligidae) are small marine copepods that live and feed on salmons and other fish. Sea lice are ectoparasites, attaching to outside of fish on skin, fins, or gills. They consume mucous, blood and skin of salmon. While a few lice on a large salmon may not cause serious damage, they can be really harmful or even fatal to a juvenile. As few as five lice may seriously harm a juvenile Atlantic salmon and may weaken adults to be more prone to infections and parasites, because the feeding activity of sea lice can cause serious fin damage, skin loss, constant bleeding, and deep open wounds. Open wounds allow diseases and other parasites to enter the fishes' bodies. Sea lice can parasitize both farmed and wild salmon, and are a major concern for both the farming industry and for salmon conservation efforts.

Currently, salmon farmers use chemicals and drugs (emamectin benzoate, dichlorvos, pyrethrum, hydrogen peroxide, azamethiphos, cypermethrin, etc) to treat fish after an outbreak of sea lice occurs. Most drugs were given orally, for example, 50µg/kg body weight/day of emamectin benzoate for 7 consecutive days). The cost of treatment can be costly and such treatment often involves potential environmental impacts. Human health concerns of using chemicals remain uncertain. Additionally, some management measures can be used to prevent a sea lice outbreak such as proper site location, separating year classes, minimizing crowding, etc. There is however, no cost-effective, non-chemical treatment method available in today's market.

In a related but different situation, thousands of ships travel around the world daily and can carry thousands of gallons of ballast water in order to maintain stability during their voyage. Sea water along with marine creatures can be ballasted from a coastal port and be transported to the next destination of call where the water may be de-ballasted along with the organisms it carries. For example, zebra mussel is one of the many notorious invasive species introduced into North America via discharge of ship ballast water. Zebra mussel invasion has caused detrimental ecological and economic impacts including the endangerment of native North American bivalves. The Convention for the Control and Management of Ship's Ballast Water and Sediments accordingly regulates discharges of ballast water and requires ships to treat ballast water.

In order to effectively treat ballast water, as required, a disinfection organism treatment device has been developed and is being utilized to eliminate noxious aquatic organisms in ship ballast water with use of ultrasound technology. This technology operates by the effect that when directly encountered by aquatic organisms, ultrasound can form cavitation bubbles that damage/kill targeted organisms. The sound energy however dissipates naturally as it travels through the water without causing secondary environmental impacts.

### SUMMARY OF THE INVENTION

It is accordingly an object of the present invention, that instead of using ultrasound to treat ship ballast water and to kill all aquatic organisms (with a total disinfection and removal of aquatic organisms from ballast water), to selectively utilize ultrasound in an effective direct aquatic treatment for farmed fish and particularly fish. The selective treatment controls by killing parasitic organisms such as sea lice on such fish, without possible harmful side effects of chemical treatment and is without detrimental effect on the aquatic organism of the fish themselves.

Generally, the present invention, in an embodiment herein, comprises a method and device for using ultrasound on fish and most commonly farmed fish in a relatively confined area or a specified area through which the fish are essentially herded for the killing of noxious parasitic aquatic organisms having gas pockets therein. The treatment area is controlled for effectiveness relative to the intensity of the ultrasound waves being used and with minimization of effect on the fish themselves. Ultrasound is a sound wave whose frequency is above the audible frequency range for ≥20,000 Hz frequency. Ultrasound sound waves have been found to effectively kill copepods in only seconds, without impacting fish, by means of acoustic cavitation of the gas pockets in the aquatic organisms and particularly microorganism. In addition, the use of ultrasonic technology has been demonstrated as a cost-effective treatment technology for sea lice prevention and treatment.

In a first aspect of the invention there is provided a method for treatment of fish to kill parasitic, noxious aquatic organisms having gas pockets therein, on the fish, as claimed in the appended claim 1.

Also described herein is a method comprising the steps of:
a) feeding fish into an enclosure having ultrasound transducers situated on the inner periphery thereof;
b) providing an attraction such as a white light which attracts noxious parasitic aquatic organisms thereto within the enclosure; and
c) applying ultrasound from the electronic transducers within the enclosure at a sufficiently high enough frequency and application time for the acoustic cavitation and killing of noxious aquatic organisms within the enclosure.

The present invention further comprises the herding elements with ultrasound transducers and the fish enclosures with inner peripherally positioned ultrasound transducers for use in the above described methods.

It is understood that the above object and other features and advantages of the present invention will become more evident from the following disclosure and description as well as the drawings in which:

### SHORT DESCRIPTION OF THE DRAWINGS

Figure 1 is a depiction of a prior art ultrasound device as used for the disinfection and purification of ship ballast waters.
Figure 2 is a depiction of a fish herding pipe with multiple outlets each having a centrally located ultrasound transducer.
Figures 3a and 3b are isometric and end views respectively of a single herding pipe with peripherally placed ultrasound transducers; and
Figure 4 is upper view of a series of ten fish cages with inner peripherally situated ultrasound transducers.

### DETAILED DESCRIPTION OF THE INVENTION AND DRAWINGS

Mechanisms of bioeffects of ultrasound include "thermal "and "mechanical effects". When ultrasound waves are absorbed by plants, energy associated with ultrasound waves is converted into heat, known as thermal effect. An ultrasound wave as it passes through an aqueous medium, may cause bubble activities known as acoustic cavitation. Cavitation causes a wide variety of changes in plant cells, ranging from microstreaming of a cell's internal structure, to a mass disruption of the cell wall. Acoustic cavitation, the dominant mechanism in many applications, is especially evident on aquatic organisms due to the presence of gas inside of aquatic organisms. The gas pockets typically are microscopic in size. Those gas pockets have a high potential to absorb acoustic energy very effectively.

Ultrasound is particularly effective in eliminating microscopic parasitic aquatic organisms, including copepods. Mortality rates are greater than 99.999%. Under exposure of ultrasound, the ultrasonic energy causes bubbling effects or acoustic cavitation inside of copepods. Cavitation damages the internal structure of copepods and causes death of the organisms. Ultrasound also is very effective in disinfection or killing microorganisms. The continuous flow ultrasonic treatments on microbes in milk and apple cider found up to 99.999% reduction in Listeria monocytogenes and 99.999% reduction in total aerobic bacteria in raw milk, and 99.999% reduction in E. coli. Ultrasound application to insects generates various adverse and deteriorating changes in morphological, biochemical and functional conditions.

Ultrasounds can effectively eliminate copepods. Low frequency ultrasound, has, on the other hand, very limited effects on fish. Ultrasound can effectively kill copepods in less than 10 seconds. However, the same sound frequency that can effectively control copepods were found to have no impact on fish physiology or behavior.

Accordingly, only a few seconds of ultrasound exposure can successfully kill copepods without hurting fish and ultrasonic devices may be used for sea lice treatment and prevention in fish farms particularly with eliminating free-swimming sea lice in farm water for sea lice outbreak prevention and for treating sea lice attached on fish. It is believed that the reflective nature of parts of fish bodies such as scales may serve to deflect ultrasound waves from having primary or residual effects on the fish, as opposed to the noxious aquatic organisms which are quickly and fatally affected by the ultrasound waves.

In order to facilitate and efficiently concentrate the effects of the ultrasound waves while protecting exterior environments, in one embodiment of the invention, the fish herding pipes and fish containing enclosures are interiorly lined with stainless steel and exteriorly covered with a soft, sound-deadening composite material. As a result, the generated ultrasound waves are continuously directed toward the fish and noxious aquatic organisms while the exterior environment is shielded from the ultrasound waves.

Currently, chemical treatment is applied after a sea lice outbreak. In accordance with embodiments of the invention, a first ultrasonic device, in embodiments herein, can terminate free-swimming sea lice to prevent an outbreak, and a second device can be used to treat sea lice on fish during and after an outbreak. Ultrasound technology is cost-effective, environmentally-sound, exhibits low fish mortality, and comprises a low maintenance alternative for sea lice treatment and prevention.

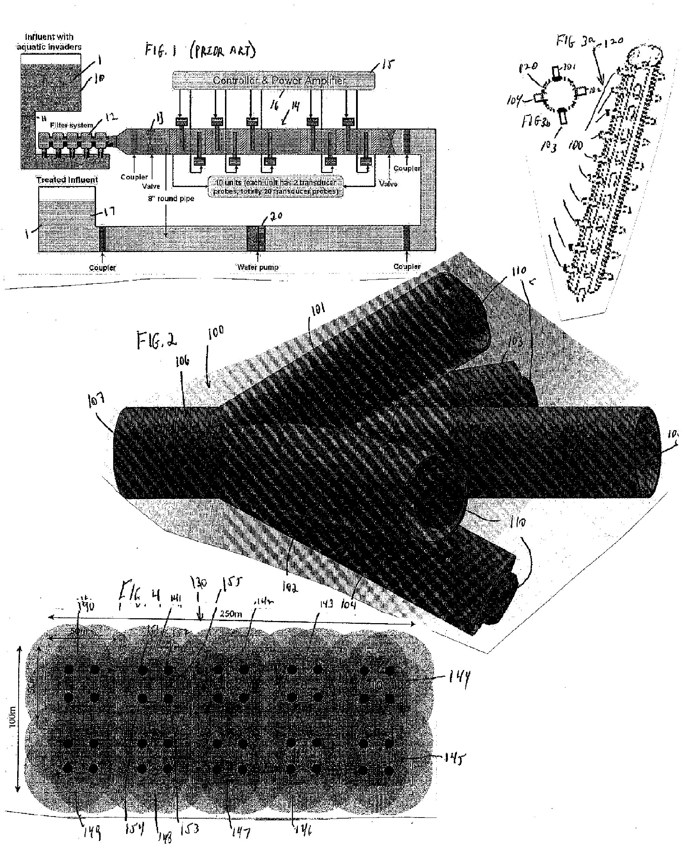

With reference to the drawings, in Figure 1, a prior art mechanism for ultrasonic treatment of ballast water is shown with the ballast water or influent containing aquatic invaders or organisms from local sites in the ballast tank 10. The influent 1 is fed through a valve 11 through filter system 12 by means of water pump 20. The influent is then fed through controlled valve 13 and an ultrasonic treatment pipe 14 with operation of controller and power amplifier 15 and 16. The influent 1 is finally pumped into tank 17 as fully treated influent 1. The system is however not amenable for the flow of anything except water and microorganisms for providing resultant treated influent entirely clear of any organisms.

As shown in Figure 2, a multiple section fish herding pipe section 100 is shown with peripherally positioned ultrasonic transducer pipes 101-104 with each containing an ultrasonic transducer 110. Lice carrying fish are herded through inlet 105, and treated at section 106 and exit outlet 107 for harvesting or movement into cages from outlet 107.

Figure 3a schematically depicts an elongated large pipe 120 comprised of ten pipe sections 100 of Figure 2 with each having separate transducer containing pipes 101-104 (power mechanisms for the respective transducers are not shown). Figure 3b depicts an end view of the pipe 120 with aligned transducer containing pipes 101-104.

Figure 4 is an aerial top view of a system collection 130 of a series of ten fish cages 140-149 with each having four internal ultrasound transducers 151-154. As shown, the total system is about 100 meters by 250 meters in width and length with each cage being about 50 by 50 meters. The interior circles 155 indicate the position at which an attractant such as a white light is beamed for attraction of loose noxious parasitic organic organisms to gather at a focal point between the respective transducers 151-154 for maximum killing effectiveness of the organisms.

It is understood that the above description and drawings are exemplary of the invention and that changes in the method and structure used with the ultrasonic transducers is possible without departing from the scope of the invention as defined in the following claims.

## Claims

1. A method for treatment of fish to kill parasitic, noxious aquatic organisms having gas pockets therein, on the fish, comprising the steps of:
1) providing at least one fish herding pipe section (100) with ultrasound transducers (110) on a periphery thereof and in a number sufficient to provide ultrasound treatment of the fish being herded therethrough at a normal herding rate of the fish and at an ultrasonic frequency at or above 20,000 Hz and below a frequency harmful to the fish to kill the parasitic, noxious aquatic organisms thereon; and
2) herding fish therethrough, with the application of ultrasound from the ultrasonic transducers at the ultrasonic frequency and at the normal herding rate to enable each fish to be exposed to the ultrasound, for the acoustic cavitation of the gas pockets within the parasitic, noxious aquatic organisms thereon, thereby killing them;
wherein the fish herding pipe section (100) comprises peripherally positioned ultrasonic transducer pipes (101, 102, 103, 104) with each containing an ultrasonic transducer (110); the ultrasonic transducers being directed toward an interior of the fish herding pipe section through which the fish are herded.

2. The method of claim 1, wherein the fish herding pipe is a pipe section of at least 6.1 metre in length and a diameter of at least 30 centimetres.

3. The method of claim 2, wherein the plurality of ultrasound transducers is four and wherein the pipe section has at least ten spaced areas circumferentially each provided with the four ultrasound transducers.

4. The method of claim 1, wherein the fish herding pipe is interiorly lined with stainless steel and exteriorly covered with a soft sound absorbing composite material.

5. The method of claim 1, wherein the parasitic, noxious aquatic organism is sea lice and the fish is salmon.

6. A method of claim 1 further comprising the steps of:
i) feeding fish into the fish herding pipe;
ii) providing an attractant which attracts the parasitic, noxious aquatic organisms thereto within the fish herding pipe.

7. The method of claim 6, wherein the attractant is a white light.

8. A fish herding pipe configured for use in the method of claim 1, the fish herding pipe comprising a tube passage having a plurality of pipe sections, each pipe section comprising peripherally positioned ultrasonic transducer pipes (101, 102, 103, 104) with each containing an ultrasonic transducer (110); the ultrasonic transducers being directed toward an interior of the fish herding pipe through which the fish are herded.

9. The fish herding pipe of claim 8, wherein the interior of the pipe is lined with stainless steel and the exterior of the pipe is covered with a soft sound absorbing composite material.

10. A enclosure for fish configured for use in the method of claim 6 comprising the fish herding pipe of claim 8 and 9, and an attractant generator configured to provide the attractant to attract noxious, parasitic aquatic organisms between the ultrasound transducers.

## Patentansprüche

1. Ein Verfahren zur Behandlung von Fischen zum Töten von parasitären, schädlichen, Gaseinschlüsse darin aufweisenden Wasserorganismen auf den Fischen, das die folgenden Schritte beinhaltet:
1) Bereitstellen mindestens eines Fischtriebrohrteilstücks (100) mit Ultraschallwandlern (110) auf einem Rand davon und in ausreichender Zahl zum Bereitstellen von Ultraschallbehandlung der dort hindurch getriebenen Fische bei einer normalen Triebrate der Fische und bei einer Ultraschallfrequenz bei oder über 20 000 Hz und unter einer die Fische schädigenden Frequenz, um die parasitären, schädlichen Wasserorganismen darauf zu töten; und
2) Treiben von Fischen dort hindurch unter Anwendung von Ultraschall von den Ultraschallwandlern bei der Ultraschallfrequenz und bei der normalen Triebrate, um zu ermöglichen, dass jeder Fisch dem Ultraschall ausgesetzt wird, zur akustischen Kavitation der Gaseinschlüsse innerhalb der parasitären, schädlichen Wasserorganismen darauf, wodurch sie getötet werden;
wobei das Fischtriebrohrteilstück (100) am Rand positionierte Ultraschallwandlerrohre (101, 102, 103, 104) beinhaltet, wobei jedes einen Ultraschallwandler (110) enthält; wobei die Ultraschallwandler auf ein Inneres des Fischtriebrohrteilstücks, durch das die Fische getrieben werden, gerichtet sind.

2. Verfahren gemäß Anspruch 1, wobei das Fischtriebrohr ein Rohrteilstück von mindestens 6,1 Metern Länge und einem Durchmesser von mindestens 30 Zentimetern ist.

3. Verfahren gemäß Anspruch 2, wobei die Vielzahl von Ultraschallwandlern vier beträgt und wobei das Rohrteilstück mindestens zehn beabstandete Bereiche im Umfang aufweist, die jeweils mit den vier Ultraschallwandlern bereitgestellt sind.

4. Verfahren gemäß Anspruch 1, wobei das Fischtriebrohr innen mit rostfreiem Stahl ausgekleidet ist und außen mit einem weichen schalldämpfenden Verbundmaterial bedeckt ist.

5. Verfahren gemäß Anspruch 1, wobei Seeläuse der parasitäre, schädliche Wasserorganismus sind und die Fische Lachse sind.

6. Verfahren gemäß Anspruch 1, das ferner die folgenden Schritte beinhaltet:
i) Leiten von Fischen in das Fischtriebrohr;
ii) Bereitstellen eines Lockmittels, das die parasitären, schädlichen Wasserorganismen anlockt, innerhalb des Fischtriebrohrs.

7. Verfahren gemäß Anspruch 6, wobei das Lockmittel ein weißes Licht ist.

8. Ein Fischtriebrohr, das zur Verwendung in dem Verfahren gemäß Anspruch 1 konfiguriert ist, wobei das Fischtriebrohr eine Röhrenpassage beinhaltet, die eine Vielzahl von Rohrteilstücken aufweist, wobei jedes Rohrteilstück am Rand positionierte Ultraschallwandlerrohre (101, 102, 103, 104) beinhaltet, wobei jedes einen Ultraschallwandler (110) enthält;
wobei die Ultraschallwandler auf ein Inneres des Fischtriebrohrs, durch das die Fische getrieben werden, gerichtet sind.

9. Fischtriebrohr gemäß Anspruch 8, wobei das Innere des Rohrs mit rostfreiem Stahl ausgekleidet ist und das Äußere des Rohrs mit einem weichen schalldämpfenden Verbundmaterial bedeckt ist.

10. Ein Gehäuse für Fische, das zur Verwendung in dem Verfahren gemäß Anspruch 6 konfiguriert ist und das Fischtriebrohr gemäß Anspruch 8 und 9 und einen Lockmittelgenerator, der konfiguriert ist, um das Lockmittel bereitzustellen, um schädliche, parasitäre Wasserorganismen zwischen die Ultraschallwandler zu locken, beinhaltet.

## Revendications

1. Un procédé pour le traitement de poissons afin de tuer des organismes aquatiques parasitaires nuisibles dans lesquels se trouvent des poches de gaz, sur le poisson, comprenant les étapes consistant à :
1) fournir au moins une section de tuyau de rassemblement de poissons (100) présentant des transducteurs à ultrasons (110) sur une périphérie de celle-ci et en un nombre suffisant pour fournir un traitement par ultrasons des poissons amenés à traverser celle-ci rassemblés à une vitesse de rassemblement normale du poisson et à une fréquence ultrasonore à hauteur ou au-dessus de 20 000 Hz et en dessous d'une fréquence nocive pour le poisson afin de tuer des organismes aquatiques parasitaires nuisibles sur celui-ci ; et
2) amener les poissons rassemblés à traverser celle-ci, avec l'application d'ultrasons en provenance des transducteurs ultrasonores à la fréquence ultrasonore et à la vitesse de rassemblement normale afin de permettre à chaque poisson d'être exposé à l'ultrason, pour la cavitation acoustique des poches de gaz au sein des organismes aquatiques parasitaires nuisibles, les tuant ce faisant ;
dans lequel la section de tuyau de rassemblement de poissons (100) comprend des tuyaux à transducteurs ultrasonores périphériquement positionnés (101, 102, 103, 104) contenant chacun un transducteur ultrasonore (110) ;
les transducteurs ultrasonores étant dirigés vers un intérieur de la section de tuyau de rassemblement de poissons que les poissons rassemblés sont amenés à traverser.

2. Le procédé de la revendication 1, dans lequel le tuyau de rassemblement de poissons est une section de tuyau d'au moins 6,1 mètres de long et d'un diamètre d'au moins 30 centimètres.

3. Le procédé de la revendication 2, dans lequel la pluralité de transducteurs à ultrasons est de quatre et dans lequel la section de tuyau a au moins dix zones espacées circonférentiellement pourvues chacune des quatre transducteurs à ultrasons.

4. Le procédé de la revendication 1, dans lequel le tuyau de rassemblement de poissons est intérieurement revêtu d'acier inoxydable et extérieurement recouvert d'un matériau composite doux absorbant les sons.

5. Le procédé de la revendication 1, dans lequel l'organisme aquatique parasitaire nuisible est le pou de mer et le poisson est le saumon.

6. Un procédé de la revendication 1 comprenant en outre les étapes consistant à :
i) amener des poissons dans le tuyau de rassemblement de poissons ;
ii) fournir un attractif qui attire les organismes aquatiques parasitaires nuisibles vers celui-ci au sein du tuyau de rassemblement de poissons.

7. Le procédé de la revendication 6, dans lequel l'attractif est une lumière blanche.

8. Un tuyau de rassemblement de poissons configuré pour être utilisé dans le procédé de la revendication 1, le tuyau de rassemblement de poissons comprenant un passage en tube ayant une pluralité de sections de tuyau, chaque section de tuyau comprenant des tuyaux à transducteurs ultrasonores périphériquement positionnés (101, 102, 103, 104) contenant chacun un transducteur ultrasonore (110) ;
les transducteurs ultrasonores étant dirigés vers un intérieur du tuyau de rassemblement de poissons que les poissons rassemblés sont amenés à traverser.

9. Le tuyau de rassemblement de poissons de la revendication 8, dans lequel l'intérieur du tuyau est revêtu d'acier inoxydable et l'extérieur du tuyau est recouvert d'un matériau composite absorbant les sons faibles.

10. Un enclos pour poissons configuré pour être utilisé dans le procédé de la revendication 6 comprenant le tuyau de rassemblement de poissons de la revendication 8 et de la revendication 9, et un générateur d'attractif configuré pour fournir l'attractif afin d'attirer des organismes aquatiques nuisibles parasitaires entre les transducteurs à ultrasons.
